# EUROPEAN PATENT APPLICATION

(11) **EP 2 479 083 A2**
(43) Date of publication of application: **25.07.2012**
(21) Application number: 11380098.1
(22) Date of filing: 01.12.2011
(51) Int. Cl.: B62B 7/06

(54) **Device applicable to the folding of infant car seats**

(30) Priority: 25.01.2011 ES 201130062 U
(71) Applicant: JANE, S.A., 08184 Palau de Plegamans (Barcelona) (ES)
(72) Inventor: Jane Santamaria, Manuel, 08184 Palau Solita i Plegamans Barcelona (ES)
(74) Representative: Morgades y Manonelles, Juan Antonio

(57) **Abstract**

An object of this invention is a device applicable to this type of infant car seats whereby the stable folding thereof is achieved with the three components, handle, front and rear legs, remaining adjacent to one another, ensuring that folding is automatic when the handle is activated downwards. To this end the device comprises a first tie rod and a second tie rod hinged at one end, respectively, to the arm of the handle and to the front leg, and at the other end both are hinged to a sliding threaded bushing on the rear leg.

## Description

### Background of the invention

This device is intended mainly for car seats whose chassis comprises, on each side, respective cores where the arms of the handle and the wheel-carrying front and back legs hinge.

In this type of car seat, to fold it said cores are unblocked and the handle and the legs fall by gravity rotating in the transverse axis of said core where they are coupled.

This folding is not stable as the handle and the legs balance on said transverse axis hindering the movement of the folded car seat.

### Disclosure of the invention

An object of this invention is a device applicable to this type of infant car seats whereby the stable folding thereof is achieved with the three components, handle, front and rear legs, remaining adjacent to one another, ensuring that folding is automatic when the handle is activated downwards.

To this end the device comprises a first tie rod and a second tie rod hinged at one end, respectively, to the arm of the handle and to the front leg, and at the other end both are hinged to a sliding threaded bushing on the rear leg.

These and other characteristics will become clearer from the following detailed description, to facilitate the understanding of which two sheets of drawings are attached that represent a practical embodiment that is purely a non-limiting example of the scope of this invention.

### Description of the drawings

In the drawings:
Figures 1, 2 and 3 diagrammatically illustrates the device that is the object of the invention viewed in an outer side elevation view, respectively, in its arrangement in the unfolded car seat, in a semi-folded state, and in a nearly folded state,

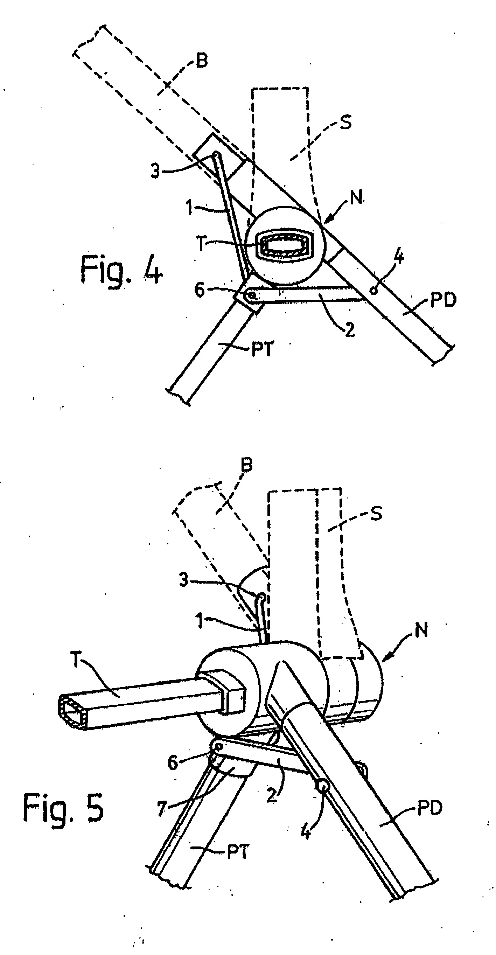

Figure 4 diagrammatically illustrates this device viewed in an inner side elevation view, and
Figure 5 diagrammatically illustrates this device viewed in an inner perspective.

According to the drawings the device applicable to the folding of infant car seats, is arranged on the sides of the car seat chassis where said chassis comprises a core (N) wherein the arms (B) of the handle, the front wheel-carrying legs (PD), and the rear wheel-carrying legs (PT) hinge, their hinging taking place on an inner transverse axis of the core, which comprises means for blocking and unblocking said hinging.

This device comprises a first tie rod (1) and a second tie rod (2) hinged at an end (3 and 4), respectively, to the arm (B) of the handle and to the front leg (PD), and at the other end (5 and 6) both are hinged to a sliding threaded bushing (7) on the rear leg (PT).

The reference (T) indicates a crossbeam that associates the cores (N) on each side of the chassis, and the reference (S) indicates the support for coupling the seat section of the car seat.

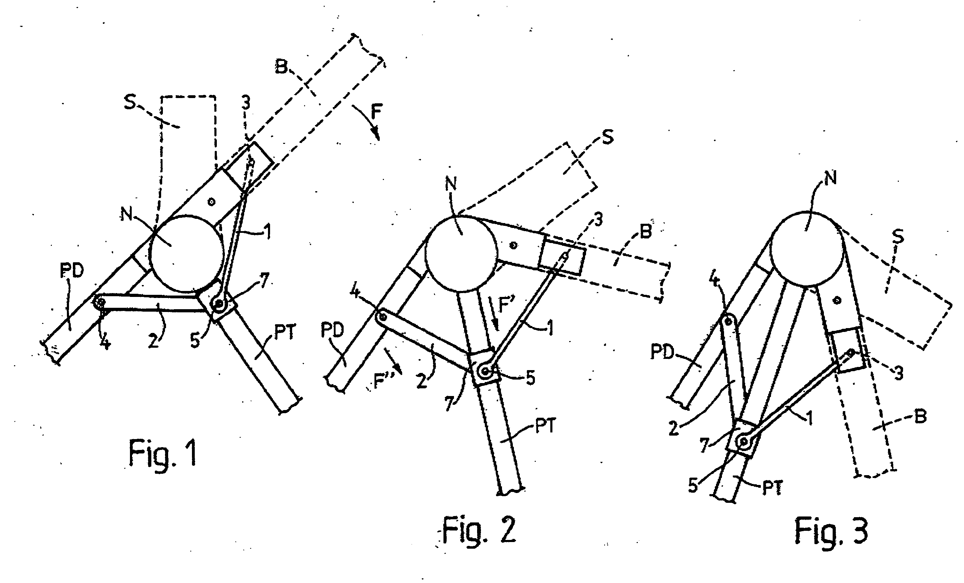

With this device, once unblocked the transverse axis of the core, where the handle and the legs of the pram are hinged, the handle is then folded under according to arrow (F) pushing the first tie rod (1) to the bushing (7) according to the arrow (F'), which via the second tie rod (2) folds the front leg (PD) downwards according to the arrow (F"), (Figure 2) until the handle and the front legs are adjacent to one and the other side of the rear legs (PT).

The invention, in its essence, can be implemented in other embodiments that differ only in detail to that indicated purely as an example, with the protection sought extending equally to said embodiments. Thus, this device applicable to folding infant car seats can be manufactured in any shape and size, with the most appropriate means and materials and with the most convenient accessories, it being possible to replace the component elements with other technically equivalent elements, as all is comprised within the spirit of the claims.

## Claims

1. Device applicable to the folding of infant car seats, which have on each side respective cores where the arms of the handle and the front wheel-carrying legs and rear wheel-carrying legs hinge, **characterised in that** it comprises a first tie rod and a second tie rod hinged at one end, respectively, to the arm of the handle and to the front leg, and at the other end both are hinged to a sliding threaded bushing on the rear leg.

2. Device applicable to the folding of infant car seats, according to claim 1, **characterised in that** when folding the handle downwards the first tie rod pushes the bushing which, via the second tie rod, folds the front leg downwards, leaving the handle and the front legs adjacent to the rear legs.
